# EUROPEAN PATENT APPLICATION

(11) **EP 1 336 469 A1**
(43) Date of publication of application: **20.08.2003**
(21) Application number: 02425082.1
(22) Date of filing: 19.02.2002
(51) Int. Cl.: B32B 3/10, B32B 7/14

(54) **Methods of manufacturing a stiffening element for an aircraft skin panel and a skin panel provided with the stiffening element**

(71) Applicant: Alenia Aeronautica S.p.A., 80038 Pomigliano D'Arco (Napoli) (IT)
(72) Inventor: LIVI, Francesco, 10098 Rivoli (Torino) (IT); Puccini, Geremia, 56010 Arena-Metato (Pisa) (IT)
(74) Representative: Fioravanti, Corrado

(57) **Abstract**

A method of manufacturing a stringer (1) for a fuselage skin panel comprises the steps of:
- preparing a pile (32) of sheet-metal strips (3) bent so as to have a cross-section of given shape, alternating with at least one layer of resin-impregnated fibre (4), and
- applying heat and pressure (70) to the pile (32) in a manner such as to cure the resin and set the shape.

A composite laminated stringer is thus obtained.

In order to manufacture a fuselage panel of composite laminated material, provided with composite laminated stringers, the resin in the stringers is cured simultaneously with the resin which is present between the metal layers of a laminate suitable for forming the outer skin.

## Description

The present invention relates to methods of manufacturing a stiffening element for an aircraft skin panel, for example, a stringer for a fuselage panel. The invention also relates to methods of manufacturing a skin panel provided with such stiffening elements.

Stiffening elements, also commonly known as stringers, are known and are constituted substantially by elongate elements made of aluminium or of metal having similar mechanical characteristics, which have a cross-section (usually Z-shaped, L-shaped or hook-shaped) that can ensure a predetermined stiffness of the panel to which they are fixed.

It is also known that the skin panels which form the upper portion of an aircraft fuselage can be formed as laminates of so-called hybrid composite material, known in the field by the term GLARE® or FML (fibre-metal laminate), comprising a plurality of layers of metal, for example, aluminium or light alloy, alternating with a plurality of layers of fibre having high mechanical characteristics, for example, glass fibre, impregnated with a structural adhesive, for example, epoxy resin.

A laminated panel of this type is disclosed, for example, in EP A-0 649 373.

Although FML panels already enable good mechanical performance to be achieved with a relatively low weight, the aeronautical industry is oriented towards the production of components which enable the overall weight of aircraft to be reduced further, for given performance.

According to a first aspect of the invention, a method of manufacturing stiffening elements as defined in Claim 1 is therefore proposed.

According to another aspect of the invention, two methods of manufacturing a skin panel provided with improved stiffening elements as defined in Claims 8 and 11 are proposed.

Some preferred but non-limiting embodiments of the invention will now be described with reference to the appended drawings, in which:
Figure 1 is a schematic cross-section view through an improved stiffening element produced by a method according to the present invention,
Figure 2 is a flow chart which shows the steps of a method of manufacturing a stiffening element in accordance with the invention,
Figures 3 to 8 show schematically some steps of the method of Figure 2,
Figure 9 is a flow chart which shows the steps of a method of manufacturing a skin panel provided with improved stiffening elements according to the invention,
Figures 10A and 10B are cross-section views through a panel with stiffening elements, during a step of its manufacture,
Figure 11 is a schematic cross-section view similar to Figure 1, of a variant of the panel according to the invention,
Figure 12 is a flow chart which shows the steps of another method of manufacturing a skin panel provided with improved stiffening elements according to the invention,
Figure 13 is a cross-section view through a panel with stiffening elements, during a step of its manufacture,
Figures 14 and 15 are two schematic cross-section views of two alternative embodiments of stiffening elements according to the invention,
Figure 16 is a cross-section view through a panel provided with a stiffening element according to Figure 15, during a step of its manufacture, and
Figure 17 shows schematically a plant for the continuous manufacture of stiffening elements according to the invention.

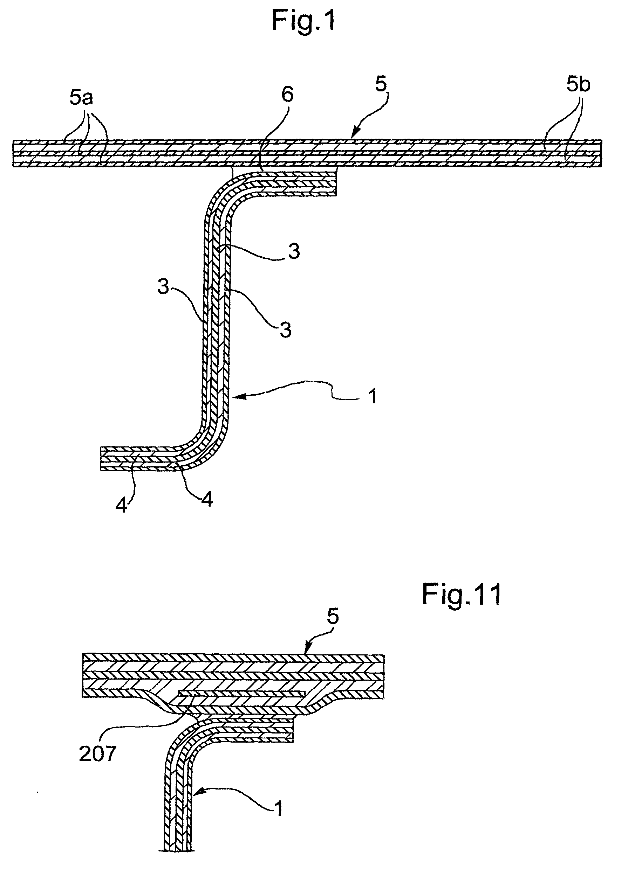

With reference to Figure 1, a longitudinal stiffening element or stringer 1 of hybrid composite material and having a substantially Z-shaped cross-section is shown. As a person skilled in the art will appreciate, this shape is provided purely by way of example and the invention is equally applicable to sections of shapes other than that shown.

The stringer 1 comprises a plurality of metal layers 3 constituted by strips of aluminium or light-alloy sheet, alternating with a plurality of layers of fibre 4 with good mechanical characteristics, for example, glass fibre or aramid fibre, pre-impregnated, in known manner, with a resin, for example, epoxy resin, so as to bond the metal layers firmly.

In the embodiment of Figure 1, three metal layers 3 and two fibre layers 4 are shown. The ratio between the number of metal layers and the number of fibre layers is preferably between 2:1 and 5:4 or more, and is selected in a manner such that the outermost layers are always metal. In any case, the number and dimensions of the metal layers and of the fibre layers are selected on the basis of the maximum stresses which the stringer 1 will have to withstand.

The metal layers 3 are preferably made of sheet metal having a thickness, for example, of between 0.2 and 0.4 mm. Each of the fibre layers 4 is preferably formed by a double layer of fibre, arranged parallel to the longitudinal axis of the stringer 1.

A stiffening element thus constructed is fixed to the inner surface of a panel, generally indicated 5, by the methods which will be described below. In the embodiment described herein, the panel 5 is a fuselage skin panel. Naturally, reference to this possible area of use should not be interpreted as in any way limiting of the scope of the patent. For example, the invention is equally applicable to the construction of wing panels.

In the preferred embodiment of the present invention, the composite stringer 1 is fixed to the panel 5 by means of a layer of structural adhesive, indicated 6. Alternatively, the composite stringer 1 may be fixed to the panel 5 by another method, for example, by riveting.

The laminated skin panel 5 shown in Figure 1 is an FML panel comprising a plurality of metal layers 5a alternating with a plurality of layers 5b of fibre pre-impregnated with resin. The general structure of the GLARE panel shown in Figure 1 may be considered generally known. The panel 5 will not therefore be described in greater detail below. For the construction of a panel of this type, reference may therefore be made, for example, to EP-A-0 649 373.

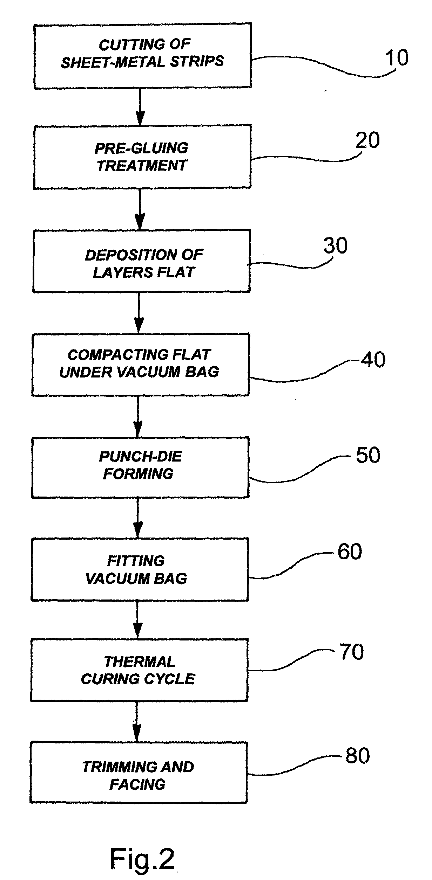

Figures 2 to 8 illustrate a method of manufacturing a composite stringer according to the present invention. With reference to the flow chart of Figure 2, the method comprises the following steps.

In step 10, a plurality of metal strips 3 having the required length and width for the stringer being manufactured is prepared. The strips 3 are preferably produced by cutting a roll of sheet metal of suitable width.

In the next step 20, the sheet-metal strips 3 undergo a pre-gluing treatment in order to form an oxide layer on the surface of the strips, to permit improved anchorage of the adhesive to the metal. This treatment comprises anodizing by known methods, for example, with the use of phosphoric acid, and the application, by spraying, of a coating which is known in the art as a "primer" and has the function of protecting the oxide layer, which is well-known to be fragile, and of preventing corrosive processes at the metal-adhesive interface. After application, the primer is subjected to a cross-linking process.

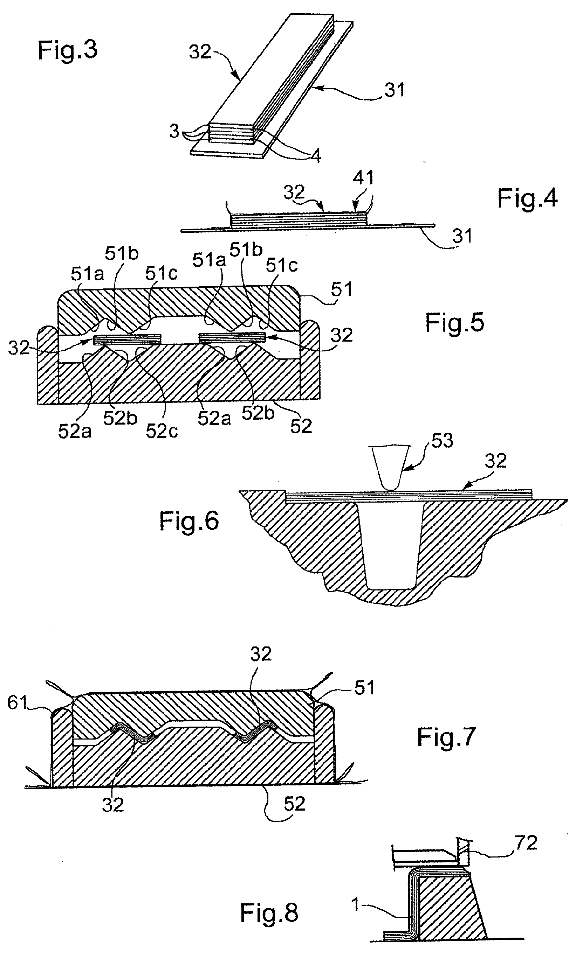

In step 30, and as shown schematically in Figure 3, the plurality of metal strips 3 and the plurality of fibre layers 4 are arranged alternately on a flat support surface 31 to produce a pile 32. During this operation, a first metal strip 3 is deposited on the flat support surface 31 and then two or more superimposed layers 4 of fibre, pre-impregnated with resin, are deposited on top of the metal strip. The glass-fibre layers, the number of which is variable according to requirements, are preferably arranged with the fibres oriented parallel to the longitudinal axis of the strip 3. These alternating depositions of metal strips 3 and fibre layers 4 are repeated until a predetermined number of layers is reached, upon the condition that the two outermost layers of the pile are constituted by metal strips.

In step 40, and as shown schematically in Figure 4, the pile 32 is compacted by a vacuum bag. This operation takes place by fitting a vacuum bag 41 on the pile 32 and depressurizing the bag 41. This eliminates any air bubbles present in the layers containing the resin and brings about temporary adhesion between the various layers of the pile 32, facilitating handling of the multi-layered pile in the compacted condition.

Then, in step 50 and as shown schematically in Figure 5, the pile 32 is bent in a manner such that its cross-section adopts a predetermined shape. This operation preferably takes place with the use of a device comprising a punch 51 and a die 52 each having one or more series of adjacent inclined surfaces 51a, 51b, 51c and 52a, 52b, 52c, each of which is oriented at 90° to the adjacent inclined surface. The inclined surfaces 51a-51c of the punch 51 are arranged facing and parallel to the corresponding inclined surfaces 52a-52c of the die 52 so that, when the punch 51 is closed onto the die 52 (Figure 7), the piles 32 interposed between the inclined surfaces are deformed, reproducing the shape of the inclined surfaces between which they are clamped. In other words, the cavities of the punch and of the die have the final shape which the stiffening element is to have. In the embodiment of Figure 7, the punch 51 and the die 52 are constructed for treating two piles 32 simultaneously, in order to produce two respective stringers having a cross-section defined herein as "Z"-shaped.

In step 60, once the punch and the die are closed onto the pile (or piles) 32, as shown schematically in Figure 7, a vacuum bag 61 is fitted on the assembly formed by the punch and the die closed onto the pile or piles 32.

It should be noted that the bending operation may alternatively be performed by means of a bending machine with a blade 53, as shown schematically in Figure 6. The subsequent step of curing in an autoclave may be performed with the already-bent piles arranged between the punch 51 and the die 52, or by placing them on the punch 51 alone and fitting the vacuum bag onto them directly.

The vacuum bag 61 is depressurized and, in step 70, the vacuum bag 61 with the piles 32 bent and held between the punch and the die, is introduced into an autoclave (not shown), with the application of heat and pressure so as to bring about curing of the resin impregnating the fibre layers 4 and to set the shape of the cross-section of the stringer 1 in accordance with the shape of the cavities of the punch and of the die.

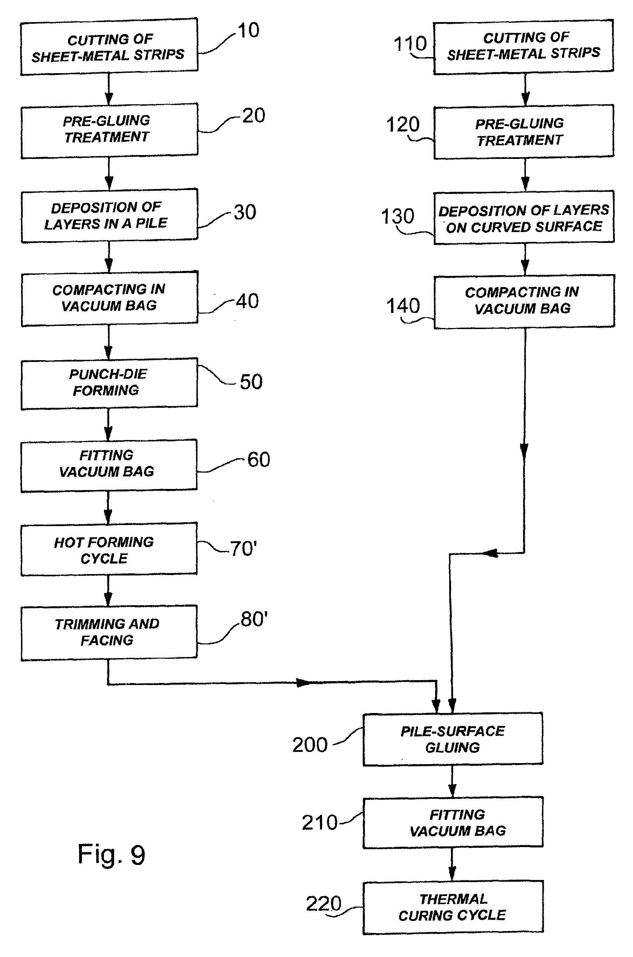

In step 80, as shown schematically in Figure 8, the stringer 1 removed from the punch is trimmed and faced. The trimming serves to remove the steps which are created in the lateral edges of the various metal layers 3, which become offset during the forming stage. The trimming may be performed mechanically with the use, for example, of a disk-type milling cutter (not shown) with polycrystalline inserts, or of a tungsten-carbide ball-end mill 72, or by other methods, not shown, for example, by laser means. The facing (not shown) enables the ends of the stringer 1 to be cut to produce exactly the required length.

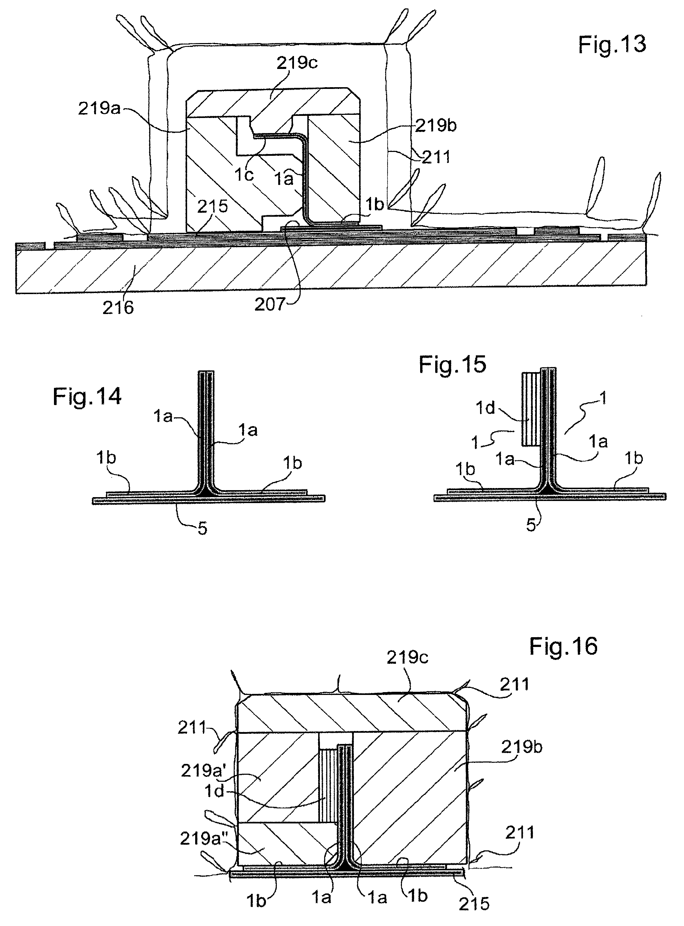

At this point, the composite stringer 1 thus obtained can be fixed to the already-cured outer skin of hybrid composite material, for example, by riveting, or by gluing with a structural adhesive. In the latter case, the assembly formed by the outer skin 5 and one or more stringers 1 will have to be subjected to a thermal cycle to cure the adhesive. Figure 13 shows a cross-section of the element for stiffening the outer skin and of a tool which can be used for locating and gluing together these two elements.

Although the method shown in the flow chart of Figure 2 is the preferred embodiment, the same result can be achieved by changing the order of some steps, that is, by first bending the metal strips and then applying the fibre-reinforced adhesive layers between the already-bent strips.

A method of manufacturing an FML laminated panel, for example, a fuselage skin panel, provided with one or more stringers of composite laminate material as described above is described, with reference to Figure 9.

With regard to the manufacture of the stringers, a method of this type provides for the same steps as those described with reference to Figure 2, up to step 60 for the fitting of the vacuum bag 61. The description of these steps will not be repeated here.

The next step 70' provides for a hot-forming cycle in which heat and pressure are applied to the assembly inside the bag 61 so as to promote cohesion of the layers by means of the adhesive present in the plurality of fibre layers 4. This step is performed in order to consolidate the shaped pile as much as possible to facilitate its handling in the subsequent processing steps; the maximum temperature reached in this step 70' is selected so as to fluidize the adhesive without polymerizing it.

Step 80', which is optional, provides for trimming and facing of the consolidated piles removed from the punch, as described with reference to Figure 2.

The preparation or laying-up of the skin panel 5 is performed in parallel with that of the stringer 1.

In step 110, a plurality of metal strips 5a are prepared, preferably by cutting portions from a sheet-metal roll of suitable width.

The next step 120 provides for a pre-gluing treatment of the surface of the metal strips, by methods similar to those described with reference to step 20 in Figure 2.

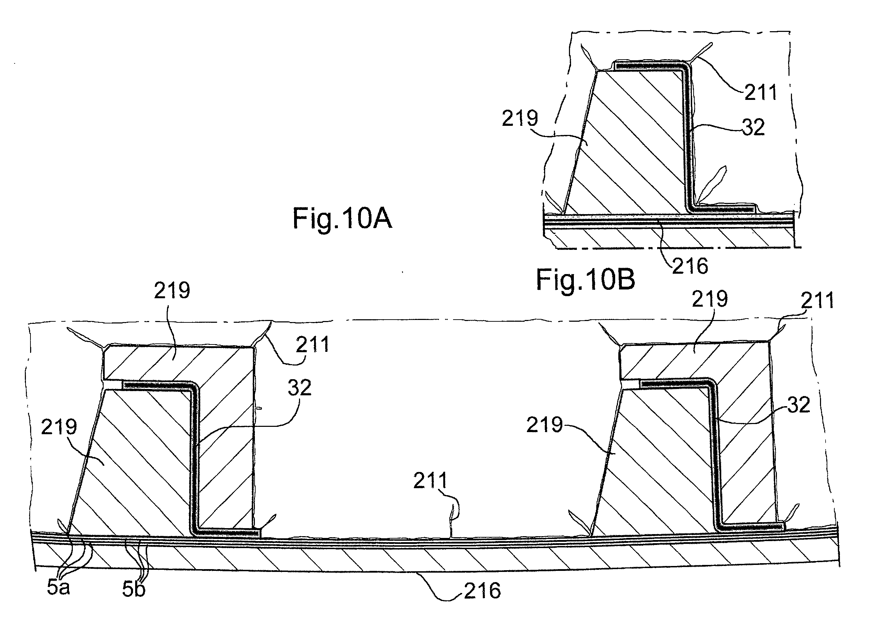

Then, in step 130, the metal layers 5a and the fibre layers 5b are arranged alternately, with the interposition of two or more superimposed layers 5b of adhesive-impregnated fibres between two consecutive metal strips 5a. The various layers are placed in succession on a support surface, indicated 216 in Figure 10A and having a surface identical to the aerodynamic profile of the fuselage panel under construction, to produce the desired layering of the outer skin. The metal strips 5a are placed with their longer dimensions oriented in a circumferential direction, with reference to the geometry of the fuselage under construction.

In step 140, the outer-skin laminate is compacted in a vacuum bag, in known manner.

Upon completion of the laying-up of the stringers 1 and of the skin 5 in parallel, in step 200, a layer of structural adhesive is applied between each shaped and consolidated pile 32 of the stringers 1 and the surface 207 of the semi-finished panel.

Again with reference to Figure 10A, rigid locating bars 219 are combined with each pile 32 in order to position it on the semi-finished panel 215 in a manner such as to keep the shaped pile, which has not yet been stiffened, in the exact desired shape and position.

In step 210, and as shown in Figure 10A, a vacuum bag 211 is fitted on the assembly formed by the bars 219 with the piles 32 and by the semi-finished panel 215, supported by the support 216 with a curved surface.

In step 220, heat and pressure are applied to the assembly thus formed in the vacuum bag so as simultaneously to cure both the adhesive of the laminates and that which is to bond the stringers 1 to the panel 5, thus producing the skin panel 5, reinforced with the stringers 1. This operation is performed by introducing the assembly contained in the vacuum bag into an autoclave where it is subjected to a thermal cycle similar to that of step 70 of the flow chart of Figure 2.

As will be appreciated, the method shown in the flow chart of Figure 9 is particularly advantageous, since it enables both the resin in the layers of the stringers and the resin in the layers of the panel, as well as the adhesive interposed between the stringers and the panel, to be cured in a single autoclave cycle.

Figure 10B shows a different tool for positioning the stiffening elements relative to the outer skin.

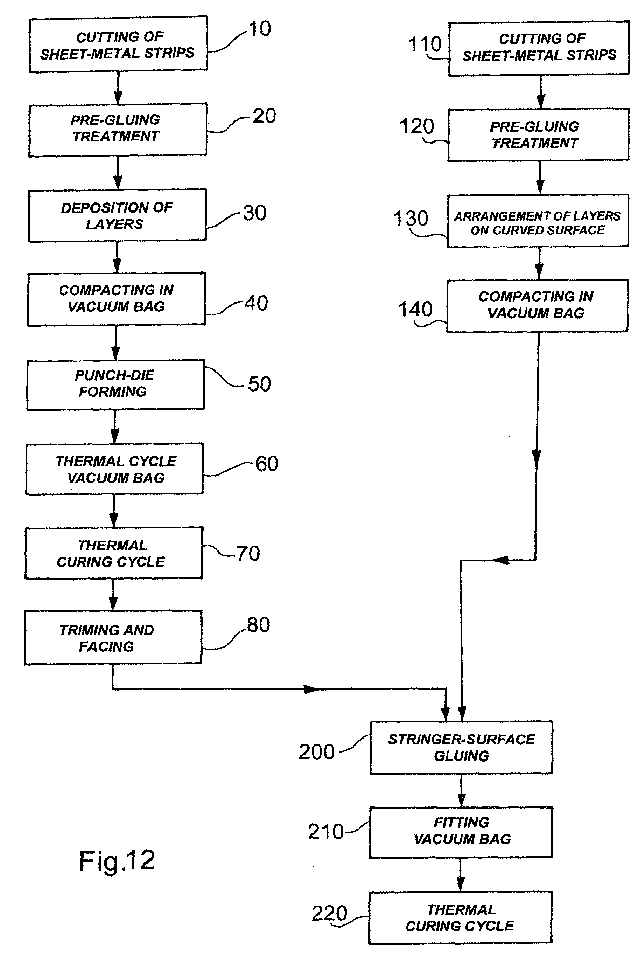

An alternative method of manufacturing an FML laminated panel provided with one or more stringers of hybrid composite laminate material of the type described above will now be described with reference to the flow chart of Figure 12.

This alternative method differs from the method of Figure 9 substantially in that it provides for two separate autoclave curing cycles, more precisely, a first cycle for curing the resin between the layers of the stringers and a second cycle for gluing the stringers to the panel, with simultaneous curing of the resin between the layers of the panel.

According to this alternative method, to manufacture the stringers, steps 10 to 80 defined in the flow chart of Figure 2 are followed to produce one or more stringers ready to be fitted on the skin laminate, which has not yet been cured.

In step 110, a plurality of metal strips 5a is prepared, preferably by cutting a roll of sheet-metal of suitable width.

The next step 120 provides for a pre-gluing treatment of the surface of the metal strips by methods similar to those described with reference to step 20.

Then, in step 130, the metal strips 5a and the fibre layers 5b are arranged alternately, with the interposition of two or more superimposed layers 5b of resin-impregnated fibre between two consecutive metal strips 5a. The various layers are placed in succession on a curved support, indicated 216 in Figure 13 and having a curvature corresponding to that of the fuselage under construction, to produce a semi-finished laminate with the desired layering for the skin. The metal strips 5a are placed with their longer dimensions oriented in a circumferential direction, with reference to the geometry of the fuselage under construction.

In step 140, the semi-finished laminate is compacted with a vacuum bag.

In step 200, a layer of structural adhesive is applied between each already-cured stringer 1 and the surface portions of the semi-finished laminate (not yet cured) to which the stringers are to be fixed.

In step 210, as shown in Figure 13, a vacuum bag 211 is fitted on the assembly formed by the stringers 1 on the semi-finished panel 215, supported by the curved support 216. In order for the stringers to retain the correct design geometry and, in particular, to prevent the bent portions of the stringer from tending to open out resiliently, losing the 90° inclination which they acquired in the cross-linking stage, a series of rigid locating bars 219a, 219b, 219c is fitted against the stringers and restrains the stringers in the correct design configuration.

In step 220, heat and pressure are applied to the assembly thus formed in the vacuum bag so as to cure simultaneously both the resin between the layers of the outer skin and the adhesive which is to bond the components together, thus producing a skin panel 5 reinforced with the stiffening elements 1. This operation is performed by introducing the vacuum bag into an autoclave in which it is subjected to a thermal cycle similar to that described with reference to step 70 of the flow chart of Figure 2.

In the embodiments described up to now, stringers with Z-shaped cross-sections have been described. Figures 14 and 15 show stringer variants with L-shaped cross-sections, particularly for use in pairs by placing the two L-shaped stringers in an opposed arrangement with their vertical flanges facing one another and joined together by a predetermined amount of structural adhesive between the two vertical flanges 1a of the two L-shaped stringers.

In the variant of Figure 15, in order to increase the moment of inertia of the resisting cross-section of the stringer, one of the two stringers has a transversely thickened portion 1d in the region of its free end. This portion has a laminated structure identical to the remaining portion of the stringer.

During the curing cycle in the autoclave, as shown in Figure 16, two separate bars 219a' and 219a" are used (acting on the side of the stringer which has the thickened portion 1d). The lower lateral bar 219a" acts against the lower portion of the flange 1a in order to cooperate with the opposed bar 219b to clamp the vertical flanges 1a; the upper lateral bar 219a', which is movable horizontally independently of the lower lateral bar 219a", serves to clamp the thickened portion 1d. The autoclave pressure acts on the bars 219a', 219a" and 219b and, by means of these, enables the elements 1d to be glued to the element 1a and the vertical flanges 1a to be glued together. This splitting of the bars is preferable to the selection of using a single bar on the side provided with the thickening since it can compensate for play due to dimensional tolerances of the elements making up the stringers and/or of the locating bars themselves. An upper cover 219c urges the bars 219a', 219a" and 219b against the base flanges 1b of the stringers and enables the pressure required for the gluing to the surface of the panel to be applied to these flanges.

Irrespective of the shape of cross-section selected, the base flanges 1b of the stringers will preferably have a portion of greater width (not shown) in the regions in which the stringers intersect the fuselage frames.

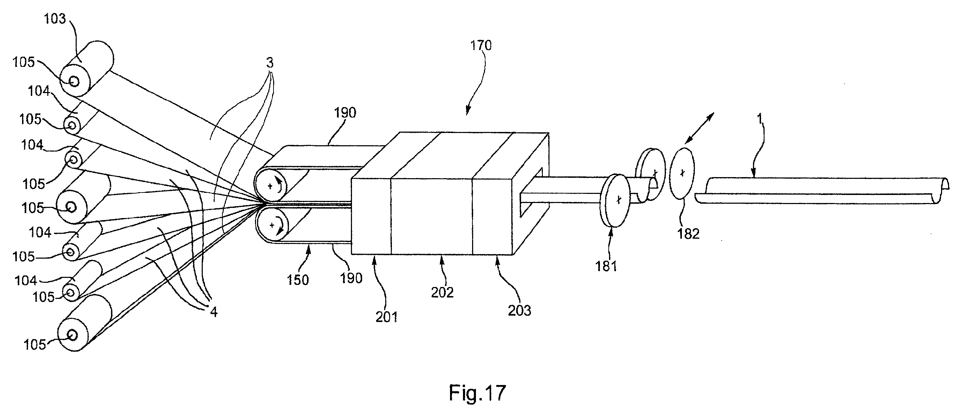

Figure 17 shows schematically a plant for the manufacture of the composite stringers by a method which has aspects similar to pultrusion. This method provides for the continuous processing of a plurality of rolls of sheet-metal strip, which has already been subjected to a continuous pre-gluing treatment comprising a preliminary treatment with phosphoric acid and subsequent application of a primer, and a plurality of rolls of unidirectional fibre pre-impregnated with resin. The plant comprises a section provided with reels 105 which can allow the plurality of rolls of sheet-metal strip 103 and the plurality of rolls of unidirectional pre-impregnated fibre 104 to unwind, a pre-forming section 150, a section 170 for the application of heat and pressure, a trimming section 181, and a facing section 182. The functions of these sections will be described further below.

The pre-forming section 150 and the section 170 for the application of heat and pressure comprise two opposed groups of shaped roller pressing means 190 or, more preferably, shaped belt pressing means (so as to prevent slippage of the roller relative to the sheet-metal) which, by their rotary motion, can exert a pressure on the sheet-metal strips and on the fibre introduced simultaneously between these groups, shaping them in accordance with a predetermined shape. The section 170 for the application of heat and pressure is divided into a heating section 201, a holding section 202, and a cooling section 203, comprising heating means and cooling means (not shown) that can perform a cooling cycle which is optimal for the cross-linking of the resin.

The operation of a plant of this type provides for portions of strip to be unwound from the respective rolls and to enter the various sections in succession, moved by known means. In each section, they are subjected to steps similar to those described above with reference to Figure 2.

In particular, the section 150 performs the superposition and bending of the layers, the sections 201, 202 and 203 may alternatively perform a complete curing cycle (as in step 70 of figure 2) or simply a hot forming cycle (as in step 70' of Figure 9); the sections 181 and 182 perform the trimming and facing (as in step 80 of Figures 2 and 9). The method illustrated in Figure 17 does not require the use of a vacuum bag, the compacting effect being achieved by virtue of the action of the pressing means 190.

As will be appreciated, a plant of this type may also be able to supply consolidated (but not cured) hybrid composite laminate stiffening elements suitable for being glued to a semi-finished skin panel to be subjected to curing subsequently, as is provided for in the method represented by the flow chart of Figure 9.

The embodiments described are intended as examples of the implementation of the invention but the invention may undergo modifications in relation to the shape and arrangement of parts, or to structural and functional details in accordance with the many possible variants which may seem appropriate to persons skilled in the art. For example, instead of the manufacture of longitudinal stiffening elements, the method according to the invention could be used for the manufacture of encircling elements, known as bulkheads or frames, which are fixed to the inner surface of the fuselage transversely. Similarly, the adhesive material may be thermosetting or thermoplastic, and the metal layers may be of aluminium or alloys thereof, or of any other suitable material.

## Claims

1. A method of manufacturing an elongate stiffening element
(1) for an aircraft skin panel, comprising the following steps:
a) preparing a pile (32) of sheet-metal strips (3) bent so as to have a cross-section of given shape, with at least one layer of resin-impregnated fibre (4) interposed between two consecutive sheet-metal strips, and
b) applying heat and pressure (70) to the pile (32) thus produced in a manner such as to cure the resin and set the shape.

2. A method according to Claim 1 in which step a) includes the steps of:
a1) piling up the sheet-metal strips (3) substantially flat,
a2) applying the at least one layer of resin-impregnated fibre (4), and
a3) bending the sheet-metal strips (3) to the said shape.

3. A method according to Claim 2 in which the bending step (a3) is performed by placing the pile (32) of sheet-metal strips (3) alternating with the fibre layers (4) in a forming die (51, 52), and in which the curing step (b) is performed with the use of the same die (51, 52) to keep the pile (32) in the desired shape.

4. A method according to Claim 2 in which step (a3) is preceded by the step of:
- fitting a vacuum bag (61) on the pile (32) and depressurizing the vacuum bag in order to compact and temporarily hold the strips which are piled up in an orderly manner.

5. A method according to Claim 1 in which at least one of said steps (a, b) is performed with the use of pairs of pressing means (190) in continuous rotary motion, acting on opposed faces of a pile (32) of sheet-metal strips (3) in which at least one layer of resin-impregnated fibre (4) is interposed between two consecutive sheet-metal strips.

6. A method according to Claim 5 in which the pressing means (190) comprise belt means.

7. A method according to Claim 5 which includes the step (70') of applying heat and pressure to the pile (32) so as to fluidize the adhesive in the fibre layers (4) without curing it.

8. A method of manufacturing an aircraft skin panel with elongate stiffening elements, comprising the steps of:
a') preparing at least one pile (32) of sheet-metal strips (3) bent so as to have a cross-section of given shape, with at least one layer of resin-impregnated fibre (4) interposed between two consecutive sheet-metal strips,
b') preparing a laminate (215) suitable for forming the outer skin, the laminate (215) comprising at least two sheet-metal layers (5a) with at least one layer (5b) of resin-impregnated fibre interposed between two consecutive sheet-metal layers,
c') arranging the at least one pile (32) on the skin laminate (215) with a layer of adhesive (200) interposed between the pile (32) and the skin laminate (215), and
d') applying heat and pressure (220) in a manner such as simultaneously to cure the resin contained in the fibre layers of the pile (32) and of the laminate (215), and the adhesive interposed between the pile and the laminate (215).

9. A method according to Claim 8 in which the polymerization step (d') includes the step of positioning rigid locating elements (219) associated with the piles (32) in order to keep the piles (32) in the desired shape and position during the curing cycle.

10. A method according to Claim 8 in which step (a') is followed by the step (70') of applying heat and pressure to the pile (32) so as to fluidize the resin in the fibre layers (4) without curing it.

11. A method of manufacturing an aircraft skin panel with elongate stiffening elements, comprising the steps of:
a") preparing at least one pile (32) of sheet-metal strips (3) bent so as to have a cross-section of given shape, with at least one layer of resin-impregnated fibre (4) interposed between two consecutive sheet-metal strips,
b") applying heat and pressure (70) to the pile (32) thus produced in a manner such as to cure the resin and set the shape so as to produce at least one elongate, composite, rigid element (1),
c") preparing a laminate (215) suitable for forming the outer skin, the laminate comprising at least two sheet-metal layers (5a) with at least one layer of resin-impregnated fibre (5b) interposed between two consecutive sheet-metal layers,
d") arranging the elongate rigid element (1) on the laminate (215), with a layer of adhesive (200) interposed between the elongate element (1) and the laminate (215), and
e") applying heat and pressure (220) in a manner such as simultaneously to cure the resin contained in the fibre layers of the laminate (215) and the adhesive interposed between the elongate element (1) and the laminate (215).

12. An elongate stiffening element (1) for an aircraft skin panel, in which the element comprises a pile of sheet-metal strips bent so as to have a cross-section of given shape, with at least one layer of resin-impregnated fibre interposed between two consecutive sheet-metal strips.

13. An aircraft skin panel comprising at least one elongate stiffening element according to Claim 12.
